Europäisches Patentamt

European Patent Office

Office européen des brevets

(11) Numéro de publication: **0 321 374**
**A1**

(12) **DEMANDE DE BREVET EUROPEEN**

(21) Numéro de dépôt: 88460030.5

(22) Date de dépôt: 18.11.88

(51) Int. Cl.4: **B 62 D 13/02**
**B 62 D 21/20**

(30) Priorité: 18.12.87 FR 8717978

(43) Date de publication de la demande:
21.06.89 Bulletin 89/25

(84) Etats contractants désignés:
BE DE ES GB IT LU NL

(71) Demandeur: **Auffret, Jean**
**Route Nationale Saint Caradec**
**F-22600 Loudeac (FR)**

(72) Inventeur: **Auffret, Jean**
**Route Nationale Saint Caradec**
**F-22600 Loudeac (FR)**

(74) Mandataire: **Le Guen, Louis François**
**CABINET Louis LE GUEN 38, rue Levavasseur B.P. 91**
**F-35802 Dinard Cédex (FR)**

(54) Moyens de liaison entre un châssis et un simple ou un double essieu directionnel de remorque ou de semi-remorque.

(57) Les moyens de liaison sont prévus entre la partie fixe de la couronne à billes (15) d'un bâti d'essieu (2 ou 3) et les semelles inférieures (13) des deux longerons (9, 10) du châssis.

Ils se composent d'une tourelle fixe (16) formée d'un cylindre métallique creux, munie d'une bride inférieure (17) en forme de couronne circulaire et de deux demi-brides supérieures (18) en forme de portions de couronnes symétriques prolongées vers l'extérieur avec un contour externe rectangulaire. La bride inférieure (17) est solidaire de la partie fixe de la couronne à billes (15) et les bords longitudinaux externes des demi-brides supérieures sont solidaires des semelles inférieures (13) des longerons. Les bords internes des deux demi-brides supérieures sont partiellement réunis par une gouttière longitudinale (29).

FIG. 1

EP 0 321 374 A1

Bundesdruckerei Berlin

## Description

### Moyens de liaison entre un châssis et un simple ou un double essieu directionnel de remorque ou de semi-remorque

La présente invention concerne des moyens de liaison entre un châssis et un essieu directionnel simple ou un double essieu directionnel de remorque ou de semi-remorque

Dans le brevet FR-A-2 449 584, déposé par le demandeur, on a décrit un châssis de semi-remorque destiné à recevoir une citerne remplie de produit en vrac, la structure du châssis permettant d'abaisser le centre de gravité de la citerne. Dans le brevet FR-A-2 577 189, également déposé par le demandeur, on a décrit des moyens de liaison entre un châssis et un essieu directeur simple permettant toujours d'abaisser le centre de gravité de la citerne, tout en augmentant la maniabilité par l'utilisation d'un essieu directeur simple. Dans la demande de brevet 87 15801 déposée également par le demandeur, on a décrit des moyens de liaison entre un châssis et un double essieu directeur, qui permet de conserver abaissé le centre de gravité d'une citerne.

Un objet de l'invention consiste à prévoir des moyens de liaison utilisables aussi bien avec un essieu directeur simple qu'avec un double essieu directeur, qui soient plus simples, moins lourds et moins coûteux que les moyens utilisés jusqu'à présent, tout en conservant les avantages de ces derniers notamment en ce qui concerne l'abaissement du centre de gravité de la citerne.

Suivant une caractéristique de l'invention, les moyens de liaison prévus entre la partie fixe de la couronne à billes d'un bâti d'essieu et les semelles inférieures des deux longerons du châssis, se composent d'une tourelle fixe formée d'un cylindre métallique creux, munie d'une bride inférieure en forme de couronne circulaire et de deux demi-brides supérieures en forme de portions de couronnes symétriques prolongées vers l'extérieur avec contour externe rectangulaire, la bride inférieure étant solidaire de la partie fixe de la couronne à billes et les bords longitudinaux externes des demi-brides supérieures étant solidaires des semelles inférieures des longerons, les bords internes des deux demi-brides supérieures étant partiellement réunies par une ou des entretoises.

Suivant une autre caractéristique, le bord interne de chaque demi-bride supérieure se compose d'un arc et de deux segments longitudinaux, de part et d'autre de l'arc de cercle, et l'entretoise est constituée par une gouttière longitudinale dont les parties adjacentes auxdits segments sont respectivement solidaires de ceux-ci, la gouttière intersectant le cylindre creux de la tourelle suivant deux lignes gauches le long desquelles la gouttière et le cylindre sont solidaires.

Suivant une autre caractéristique, dans la région des bords transversaux des demi-brides supérieures, des goussets ou des moyens équivalents de renfort sont prévus entre ces régions et les surfaces internes adjacentes des longerons.

Suivant une autre caractéristique, il est prévu un véhicule à double essieu arrière, chaque bâti d'essieu étant réuni au châssis par des moyens de liaison définis ci-dessus, les deux couronnes à billes étant réunies par des bielles s'articulant sur des manetons.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue schématique de côté de l'arrière d'une semi-remorque suivant l'invention,

la Fig. 2 est une vue schématique en plan, partiellement en coupe, de l'arrière de la semi-remorque de la Fig. 1,

la Fig. 3 est une vue partielle en coupe transversale, suivant la ligne III-III, ne faisant apparaître que des éléments essentiels des moyens de liaison suivant l'invention.

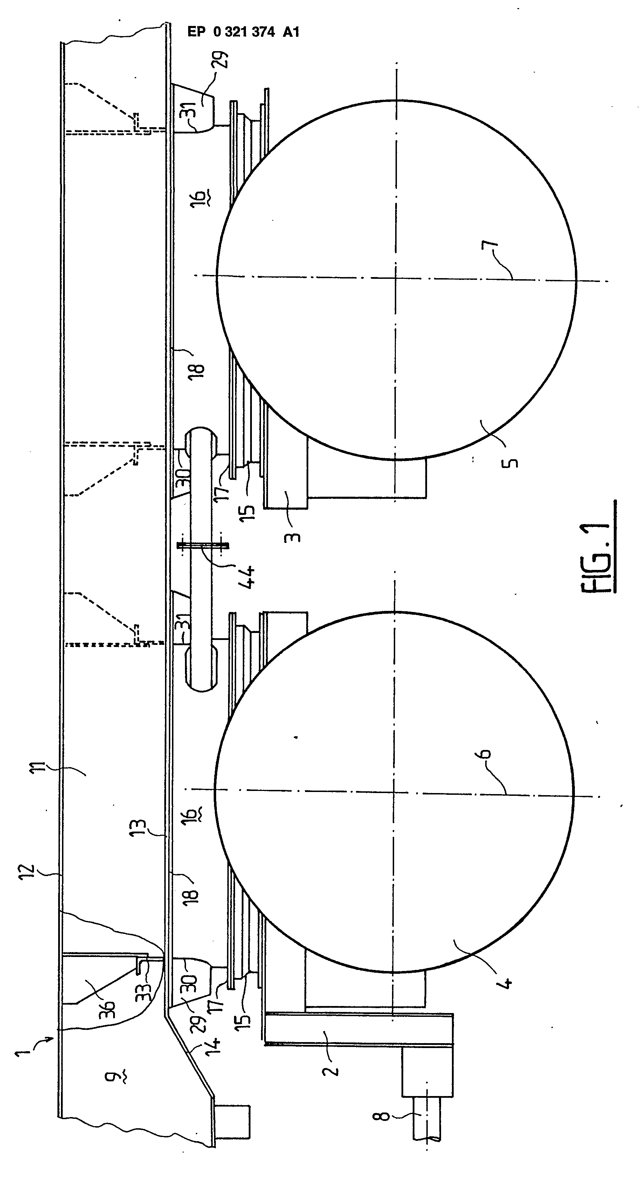

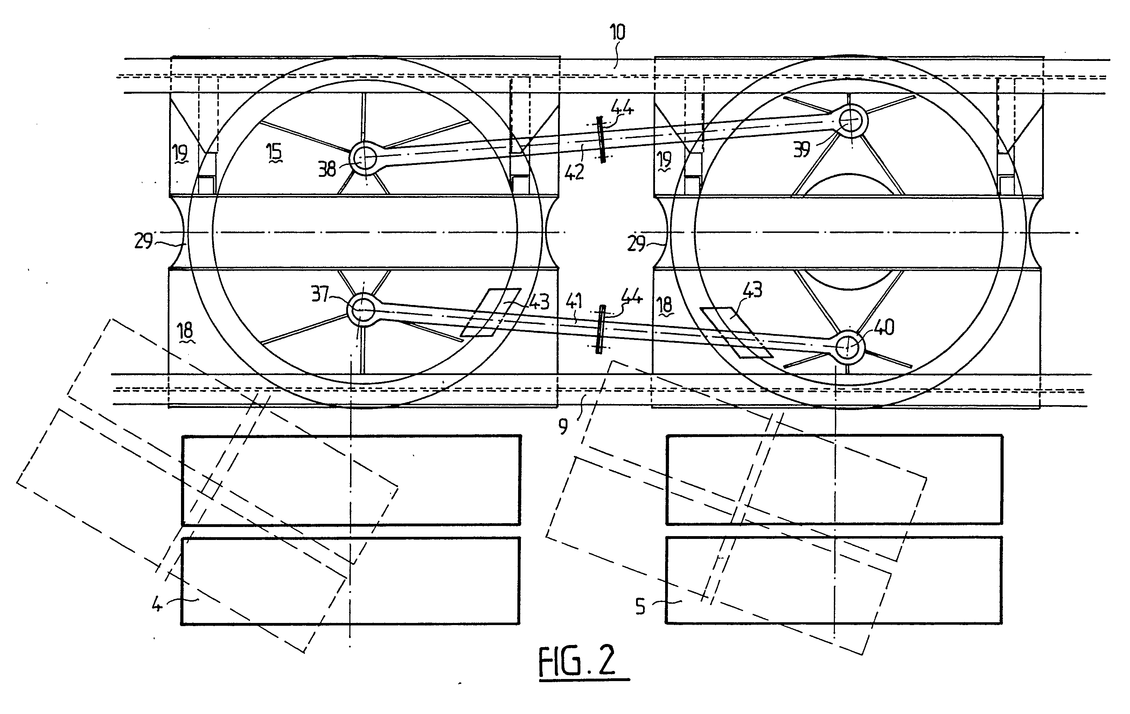

La partie de châssis 1 montrée aux Figs. 1 et 2 appartient à une semi-remorque et repose à l'avant, non montré, par un pivot d'attelage sur la sellette d'attelage d'un tracteur. Ce châssis repose, à l'arrière, par l'intermédiaire de deux bâtis d'essieu 2 et 3, sur deux paires de roues 4 et 5. Le bâti d'essieu avant 2 pivote autour d'un axe vertical 6 et le bâti d'essieu arrière 3 autour d'un axe vertical 7. Pour la commande de pivotement, le bâti 2 est relié à un crochet d'attelage du tracteur, non montré, au moyen d'une flèche télescopique 8. Ce genre de commande de pivotement d'un essieu directeur est connu. Les deux bâtis 2 et 3 sont réunis par des moyens d'accouplement à bielles qui seront décrits plus tard et qui ne font pas partie de l'invention. En pratique, il s'agit de moyens d'accouplement qui font partie de l'état de la technique et qui sont, par exemple, décrits dans le document DE-A-1 263 519.

Le châssis se compose de deux longerons symétriques 9 et 10. Comme le montre la Fig. 1, au-dessus des bâtis d'essieu 2 et 3, le longeron 9, formé d'une poutre métallique en I, a une âme 11 de largeur réduite, la semelle supérieure horizontale 12 restant droite tandis que la semelle inférieure 13 monte, suivant un segment 14, devant le bâti 12. La semelle 13 est représentée horizontale derrière le bâti 3, mais pourrait, en variante, redescendre à son niveau initial. Le longeron 10 a une forme identique. En pratique, le segment 14 et la semelle 13, à son niveau supérieur, permettent aux roues 4 et 5 de s'engager légèrement sous les longerons du châssis quand les bâtis 2 et 3 tournent, comme le montre symboliquement la Fig. 2.

Le bâti d'essieu 2 est classiquement solidaire d'une couronne à billes 15. Entre la partie fixe de la couronne à billes 15 et les semelles 13, sont prévus des moyens de liaison qui font partie de l'invention. Ces moyens de liaison comprennent une tourelle fixe 16 formée d'un cylindre métallique creux et munie d'une bride inférieure 17 en forme de couronne circulaire et de deux demi-brides supérieures 18 et 19 en forme de portions de couronnes prolongées vers l'exté rieur jusqu'à avoir un contour externe rectangulaire.

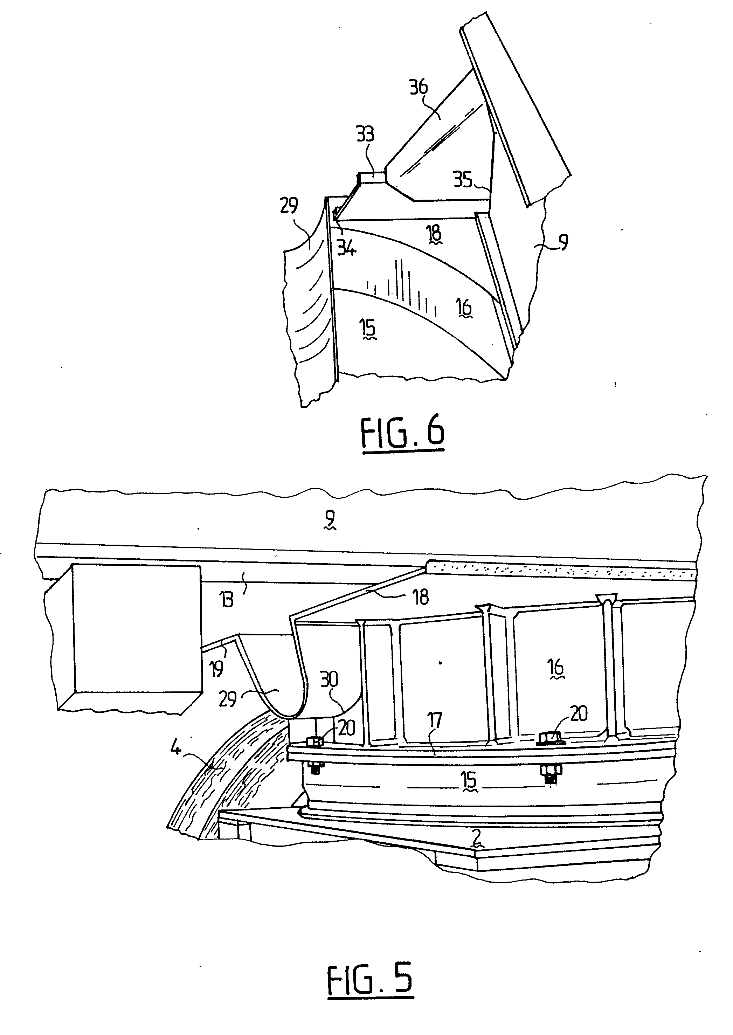

La bride 17 a sensiblement les mêmes dimensions que la partie fixe de la couronne à billes 15 et peut être fixée à celle-ci par des boulons 20, Fig. 5.

Les demi-brides supérieures 18 et 19 sont symétriques par rapport à l'axe longitudinal du châssis. Le bord externe 21 de la demi-bride 18 est sensiblement droit et coïncide avec le bord externe de la semelle 13, auquel il est soudé. Le contour interne de la demi-bride 18 se compose de deux segments longitudinaux 22 et 23 encadrant un arc 24, par exemple un arc de cercle. De même, la demi-bride 19 comporte un bord externe longitudinal 25 et un bord interne formé de deux segments 26 et 27, et d'un arc de cercle 28. Les segments 22, 23 et 26, 27, qui sont transversalement distants les uns des autres, sont respectivement reliés, par soudure, aux extrémités des deux bords d'une gouttière 29 en forme de demi-cylindre longitudinal ouvert vers le haut.

Les bords supérieurs de la gouttière 29 sont donc au niveau du haut de la partie cylindrique de la tourelle 16. Comme le montre la Fig. 5, il apparaît que la partie cylindrique avant de la tourelle 16 est découpée le long d'une ligne 30 pour le passage du bout avant de la gouttière. Les lignes 30 et 31 sont des courbes gauches résultant de l'intersection de deux cylindres. Le long de ces courbes gauches 30 et 31, la gouttière 29 et la tourelle sont reliées par soudure. De même, la partie arrière de la gouttière 29 dépasse à l'arrière de la tourelle 16. Il existe donc aussi une ligne de raccord 31 entre l'arrière de la tourelle et le bout arrière de la gouttière. En pratique, le rôle de la gouttière 29 s'explique comme suit:

- l'abaissement du centre de gravité d'une citerne montée sur le châssis et destinée à transporter un aliment en grains ou un engrais en grains qui est déchargé au moyen d'une vis sans fin longitudinale logée en bas de la citerne est obtenu en prévoyant que le carter de la vis sans fin se trouve le plus bas possible entre les longerons du châssis;

- si la tourelle laisse passer le carter de la vis sans fin, on obtient un plus grand abaissement du centre de gravité que dans le cas contraire;

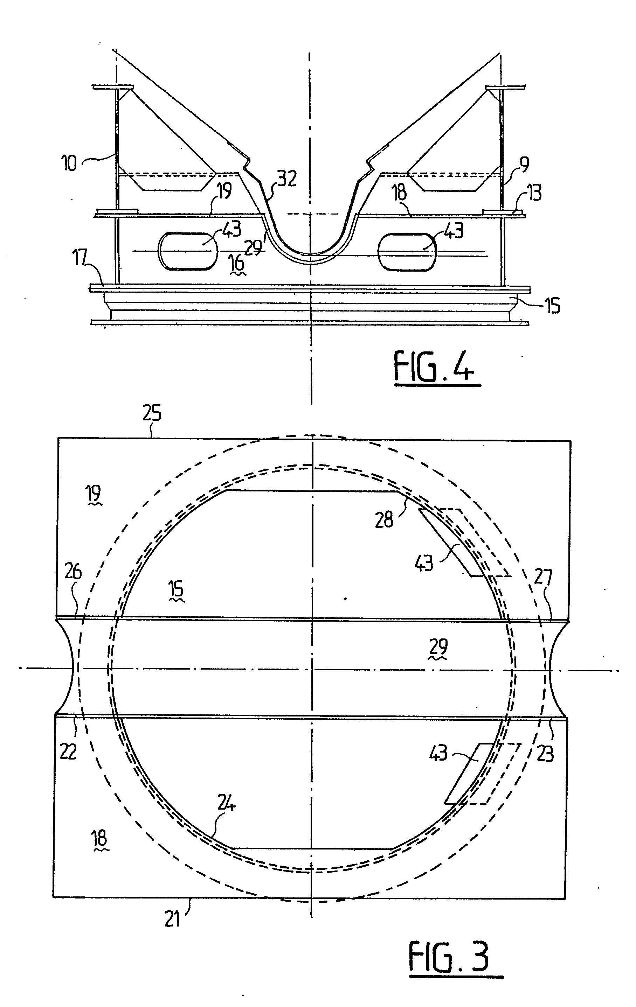

- la gouttière en réunissant les parties découpées dans la tourelle, sous le carter 32, Fig. 4, contribue à renforcer les moyens de liaison entre le châssis et chaque bâti d'essieu 2 ou 3.

En ce qui concerne le bâti d'essieu 3, on retrouve évidemment des moyens de liaison semblables à ceux du bâti d'essieu 2, c'est-à-dire une tourelle 16, une gouttière 29, etc.

En se référant à nouveau aux moyens de liaison du bâti d'essieu 2, au droit de la ligne 30, sur la demi-bride 19, est soudé un tronçon de cornière en U 33, dont le U est ouvert vers l'avant et ayant une première extrémité 34, adjacente au bord correspondant de la gouttière 29, et une seconde extrémité 35, adjacente à l'âme du longeron 10. L'extrémité 35 est soudée en bout à l'âme de 10 et latéralement à la partie correspondante de la semelle inférieure 13 du longeron 10. Entre la face supérieure du tronçon de cornière en U 33 et la semelle supérieure 12 du longeron 10, est soudé un gousset 36. Le tronçon 33 et le gousset 36 ont pour effet de renforcer la liaison entre la demi-bride 19 et le châssis. La liaison entre la demi-bride 18 et le châssis est renforcée de la même manière. Au droit de la ligne 31, on retrouve les mêmes moyens de renforcement, avec comme différence que l'orientation du tronçon de cornière en U est inversée. En ce qui concerne la liaison entre le bâti d'essieu 3 et le châssis, on utilise des moyens de renforcement semblables. Dans l'exemple de réalisation décrit, ces moyens de renforcement sont constitués par un tronçon de cornière en U et un gousset, mais ils pourraient être constitués différemment.

La vue de la Fig. 2 fait apparaître les moyens d'accouplement entre les bâtis d'essieu 2 et 3. Sur les plaques mobiles des couronnes à billes respectivement associées aux bâtis 2 et 3, sont prévus des manetons 37, 38 et 39, 40. Les manetons 37 et 38 sont équidistants de l'axe 6 de chaque côté de l'axe longitudinal du châssis. Les manetons 39 et 40 sont équidistants de l'axe 7, également de chaque côté de l'axe longitudinal. Les manetons 37 et 38 sont plus éloignés de l'axe 6 que les manetons 39 et 40 de l'axe 7. Les manetons 37 et 39 sont reliés par une bielle 41 tandis que les manetons 38 et 40 sont reliés par une bielle 42. Les têtes des bielles 41 et 42 peuvent tourner autour de leurs manetons respectifs. Comme le montre la Fig. 1, les parties supérieures des manetons 37 et 39 sont au-dessous du niveau des demi-brides supérieures et au-dessus des brides inférieures des tourelles 16. Des ouvertures adéquates 43 sont donc prévues dans les parties cylindriques des tourelles 16 pour le passage des bielles 41 et 42.

Dans l'exemple décrit on a supposé qu'il s'agissait d'une semi-remorque à double essieu directeur, mais bien entendu les moyens de liaison de l'invention peuvent être utilisés sur un autre véhicule à double essieu directeur ou un véhicule à simple essieu directeur.

A la Fig. 2, on a montré que les bielles 41 et 42 sont chacune en deux parties terminées en leur milieu par des brides qui sont reliées l'une à l'autre par des boulons. Ainsi, il est possible de démonter les bielles sans démonter d'autres parties importantes des bâtis d'essieu.

## Revendications

1) Moyens de liaison entre un châssis (1) et un essieu directionnel simple ou un double essieu directionnel de remorque ou de semi-remorque, caractérisés en ce qu'ils sont prévus entre la partie fixe de la couronne à billes (15) d'un bâti d'essieu (2 ou 3) et les semelles inférieures (13) des deux longerons (9, 10) du châssis, se composent d'une tourelle fixe (16) formée d'un cylindre métallique creux, munie d'une bride inférieure (17) en forme de couronne circulaire et de deux demi-brides supérieures (18, 19) en forme de portions de couronnes symétriques prolongées vers l'extérieur avec un contour externe rectangulaire, la bride inférieure (17) étant solidaire de la partie fixe de la couronne à billes (15) et les bords longitudinaux externes (21, 25) des demi-brides supérieures (18, 19) étant solidaires des semelles inférieures (13) des longerons, les bords internes (22, 23 et 26, 27) des deux demi-brides supérieures (18, 19) étant partiellement réunies par une ou des entretoises (29).

2) Moyens de liaison suivant la revendication 1, caractérisés en ce que le bord interne de chaque demi-bride supérieure (18 ou 19) se compose d'un arc (24 ou 28) et de deux segments longitudinaux (22, 23 ou 26, 27), de part et d'autre de l'arc de cercle (24 ou 28), et en ce que l'entretoise est constituée par une gouttière longitudinale (29) dont les parties adjacentes auxdits segments sont respectivement solidaires de ceux-ci, la gouttière (29) intersectant le cylindre creux de la tourelle (16) suivant deux lignes gauches (30, 31), le long desquelles la gouttière (29) et le cylindre (16) sont solidaires.

3) Moyens de liaison suivant la revendication 1 ou 2, caractérisés en ce que, dans la région des bords transversaux des demi-brides supérieures (18, 19), des goussets ou des moyens équivalents de renfort (33, 36) sont prévus entre ces régions et les surfaces internes adjacentes des longerons (2, 3).

4) Véhicule à double essieu arrière, chaque bâti d'essieu étant réuni au châssis par des moyens de liaison définis suivant l'une des revendications 1 à 3, caractérisé en ce que les deux couronnes à billes sont réunies par des bielles (41, 42) s'articulant sur des manetons, les bielles passant dans des trous correspondants (43) de la tourelle (16).

5) Véhicule suivant la revendication 4, caractérisé en ce que les bielles sont chacune en deux parties terminées en leur milieu par des brides qui sont reliées l'une à l'autre par des boulons.

FIG.1

FIG. 2

FIG.4

FIG.3

FIG.6

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 446 209 (FAVE) <br> * En entier * <br> --- | 1,4 | B 62 D 13/02 <br> B 62 D 21/20 |
| A | DE-C- 521 826 (FA. FRIED. BEYERSMANN) <br> * En entier * <br> --- | 1 | |
| D,A | FR-A-2 577 189 (AUFFRET) <br> --- | | |
| D,A | FR-A-2 449 584 (AUFFRET) <br> --- | | |
| P,D <br> A | FR-A-2 606 353 (AUFFRET) <br> ----- | | |

DOMAINES TECHNIQUES
RECHERCHES (Int. Cl.4)

B 62 D

Le présent rapport a été établi pour toutes les revendications

| Lieu de la recherche | Date d'achèvement de la recherche | Examinateur |
|---|---|---|
| LA HAYE | 06-03-1989 | PIRIOU J.C. |